Europäisches Patentamt

European Patent Office

Office européen des brevets

(19)

(11) Publication number: **0 075 288**
**B1**

(12) **EUROPEAN PATENT SPECIFICATION**

(45) Date of publication of patent specification: 23.04.86

(51) Int. Cl.⁴: **B 29 D 30/56, B 29 C 35/04**

(21) Application number: **82108586.7**

(22) Date of filing: **17.09.82**

(54) Tire retreading system with envelope pressure application.

(30) Priority: **21.09.81 US 304523**

(43) Date of publication of application:
**30.03.83 Bulletin 83/13**

(45) Publication of the grant of the patent:
**23.04.86 Bulletin 86/17**

(84) Designated Contracting States:
**AT BE CH DE FR GB IT LI LU NL SE**

(56) References cited:
**US-A-3 236 709**
**US-A-3 325 326**
**US-A-3 399 551**
**US-A-3 745 084**
**US-A-3 769 121**
**US-A-3 856 601**
**US-A-3 884 739**
**US-A-3 951 720**
**US-A-4 075 047**
**US-A-4 129 474**
**US-A-4 151 027**

(73) Proprietor: **Bandag Licensing Corporation**
**Bandag Center**
**Muscatine, Iowa 52761 (US)**

(72) Inventor: **Brewer, Donaldee**
**R.R. 4, Box 48**
**Muscatine Iowa 52761 (US)**

(74) Representative: **Patentanwälte Wenzel & Kalkoff**
**Ruhrstrasse 26 Postfach 2448**
**D-5810 Witten (DE)**

The file contains technical information
submitted after the application was filed and
not included in this specification

Courier Press, Leamington Spa, England.

**Description**

Background of the Invention

This invention relates to a method for retreading tire casings with precured tread, using a flexible fluid tight member hereinafter referred to as cover which covers the tread and at least the side walls of the tire casing. In this system of retreading, the flexible cover is pressed against the tread by the fluid pressure applied to the exterior of the cover so that the tread and tire casing are forced together. Simultaneously, heat is applied in order to vulcanize the rubber-based bonding medium which has been provided between the circumferential surface of the tire casing and the under-surface of the tread member.

It is conventional in this type of retreading to remove residual air from the space between the flexible cover and the tread and tire casing, at one or more times during the process or continuously throughout the process. The air can be removed by connecting a conduit from the space between the flexible cover and the tread member to the atmosphere or between the said space and a vacuum source. Removal of the air is accepted as an important feature of this type of retreading system because air can interfere with proper bonding of the tread to the tire casing and/or can result in deformation and/or improper seating of the tread member. It is important that the flexible cover be fluid tight and be sealed to the tire casing in order to avoid leakage of pressure fluid through or past the flexible cover into the space between the tread member and the tire casing. Leakage may produce the disadvantages referred to and thereby create a possibility of tire failure.

Examples of retreading systems employing the above summarized principles are described in detail in U.S. Patents 2,966,936 (Schelkmann), 3,236,709 (Carver), 3,325,326 (Schelkmann), 3,745,084 (Schelkmann), 3,399,551 (Brodie et al.), 3,951,720 (Brodie), 4,075,047 (Brodie et al.), and 4,151,027 (Schelkmann et al.). Patents 3,325,326 and 4,151,027 disclose the concept of feeding the pressure fluid into the space between the flexible cover and the assembly of the tire casing and tread so as to maintain a pressure differential between the inside and outside of the flexible fluid tight cover.

From the U.S. Patent 3,325,326 it is known to maintain a pressure difference of 1 kg/cm$^2$ between the inside and outside of the flexible fluid tight member, hereinafter called "cover", by feeding a pressure fluid into the interior of the cover from a source of pressure outside a vessel in which the retread tire casing assembly undergoes the required heat treatment. A separate pressure line connects the source of pressure with the cover of a first retread tire casing assembly in the vessel, the covers of the other assemblies being connected to the cover of the first assembly via short pressure lines from cover to cover. This method requires a precise pressure control system for establishing and maintaining the predetermined pressure difference.

From the U.S. Patent 4,151,027 it is known to supply fluid pressure from the vessel to the cover at a predetermined pressure difference between the vessel and the cover. The predetermined pressure difference is maintained by an overpressure valve mounted on each cover such that, when the pressure difference exceeds 1 kg/cm$^2$, the overpressure valve opens and lets pressure medium flow through the overpressure valve straight into the space. With this method no connection line to the cover is required and each retread tire casing assembly is automatically pressure loaded.

In view of the above the main object of the invention is to improve the method known from U.S. patent 4,151,027 such that when automatically pressurizing the space between the cover and the tire assembly in dependence of the pressure loading of the vessel the pressure on the tread material is provided in a uniform manner, in the event of a leak of fluid pressure into the space an increase of pressure due to a small leak is compensated automatically and monitoring of the system during operation as a total system and/or for individual tire assemblies particularly in case of a severe leak is made possible.

The known method of retreading a tire casing which includes the steps of applying a precured rubber tread to the periphery of a tire casing, having side walls, with a layer of vulcanizable rubber base bonding material interposed between the tread and the tire casing, covering the tread and at least the adjacent side walls of the tire casing with a flexible air tight cover, applying fluid pressure to the interior of a vessel containing the cover, tread and tire casing in order to press the cover against the assembly of tread and tire casing and supplying fluid pressure from the vessel to the cover at a predetermined pressure difference between the vessel and the cover, is according to the invention characterized by supplying fluid pressure from the vessel through a pressure differential check valve to a cover manifold positioned outside the vessel and supplying fluid pressure to the cover from said cover manifold.

The present invention provides a method for providing pressure on the tread material in a uniform manner. The technique includes automatically pressure loading the system by supplying fluid pressure to the vessel and from there through the pressure differential check valve to the cover manifold at a predetermined lower pressure than the pressure in the vessel, each cover being connected to the cover manifold for supplying fluid pressure from said manifold to the space between the cover and the tire assembly so as to maintain the predetermined pressure differential between the inside and the outside of the flexible cover.

If during the curing cycle in the vessel at any time one of the tire assemblies would experience a leak in the flexible cover, the pressure fluid would pass from the vessel into the cover space and from there into the cover manifold. If it is a small leak, it should not do any damage in the system because the fluid pressure increase caused by the leak is compensated in the cover manifold so that the pressure difference can be maintained near the predetermined value and the leak cannot damage the cure in the tire assemblies. If, however, there is a large gush of pressure fluid, the operator gets aware of such a severe leak because the cover manifold allows monitoring of the system during operation. In this case the operator can undertake any suitable counter measure for venting the resulting excess pressure from the space and/or manifold. Since the cover manifold is positioned outside the vessel and because each cover has a connection to the manifold the operator can very easily determine which tire assembly is leaking.

The method according to the invention can be used for a system which includes mounting tire casings on a rim member and sealing the cover between extended flanges of the rim and the side walls of the tire casing and placing said mounted tire assemblies in the vessel. Alternatively, the method according to the invention may be used for a system which includes covering the tread and the tire casing with a flexible air tight cover inside and outside without using a rim member.

In the preferred embodiment the conduit system also includes a pressure relief valve which will vent excessive pressure from the space in the event of a severe leak of pressure fluid from the vessel into the liquid tight flexible cover. Means are also provided for initially removing entrapped air from the space. A means may include a valve having a first position in which the space is placed in communication with either the atmosphere or a vacuum source and a second position in which the space is placed in communication with the downstream pressure of the pressure regulation check valve and a third position where the system is completely turned off.

Detailed Description

The invention will be further understood from the following more detailed description taken with the drawings in which:

Figure 1 is a schematic view of a tire retreading system illustrating the principles of the present invention;

Figure 2 is a graph illustrating the pressure and time relationship between the curing tube, the vessel and the cover, illustrating automatic pressurization of the system illustrated in Figure 1;

Figure 3 is a cross-section of the tire assembly as mounted in Figure 1 taken along line 3—3 of Figure 1;

Figure 4 is a view taken from the circled area of Figure 3 illustrating the cover's action on the groove and the pressure differential of the system;

Figure 4A is a view similar to Figure 4 showing a wicking material positioned between the cover and the tread material;

Figure 5 is a schematic view of the tire retreading system illustrating the principles of the present invention;

Figure 6 is a graph illustrating the pressure and time relationship of the vessel and cover, illustrating automatic pressurization of the retreading system illustrated in Figure 5;

Figure 7 is a cross-sectional view of the tire assembly as mounted in Figure 5 taken along line 7—7 of Figure 5;

Figure 8 is a view taken from the circled area of Figure 7 illustrating the cover and tread relationship of the figure shown in Figure 7; and

Figure 8A is a view similar to Figure 8 illustrating a wicking material positioned between the cover and the tread material.

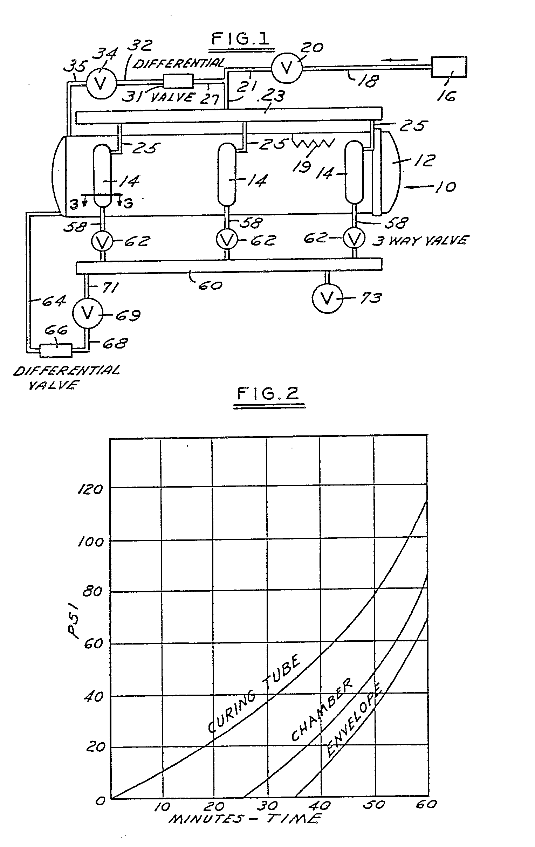

Referring generally to Figure 1, there is illustrated a tire retreading system including an autoclave or pressure vessel generally referred to as vessel 10 which is adapted to receive through a cover 12 a plurality of tire assemblies 14 for retreading. The interior of the vessel 10 can be pressurized from a fluid pressure source 16 by way of a shop pressure line 18 with air, water, steam or a mixture of steam and air. The pressurizing medium is heated either before introduction into the vessel 10 or after introduction by means of a heater as identified by numeral 19 located in the vessel 10. The shop pressure line 18 may be pressurized at approximately 150 psi (=1,034 MPa) for example. The line 18 is connected to regulator valve 20 which adds pressure up to 115 psi (=0,793 MPa) and then closes. A line 21 passes fluid to a tire inflation manifold 23 from valve 20. The fluid passes from the manifold 23 through tire inflation lines 25 which inflate the curing tube 26 of the tire assemblies 14 to a predetermined pressure of 115 psi (=0,793 MPa) as will be explained in more detail later. A pressure vessel fill line 27 is connected to line 21 between valve 20 and the manifold 23. The line 27 connects to a pressure differential check valve 31 which opens when the pressure in line 27 is 30 psi (=0,207 MPa) higher than the downstream pressure past valve 31. A line 32 connects the valve 31 to a pressure regulator valve 34 which will close when the pressure in line 32 reaches 85 psi (=0,586 MPa). A line 35 connects the valve 34 to the pressure vessel 10.

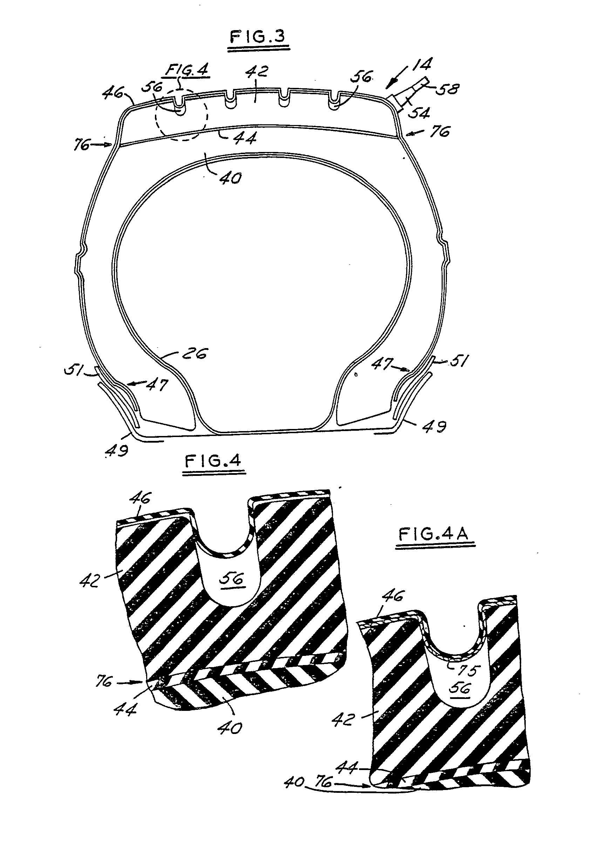

Each tire assembly 14, best viewed in Figure 3, includes a tire casing 40, a precured tread 42 and a layer of rubber-base bonding material 44, sometimes referred to as cushion gum, between the under surface of the tread 42 and the crown surface of the tire casing 40. A flexible fluid tight member, sometimes referred to as an envelope and hereinafter called cover 46, is made of rubber, for example, and overlies the tread 42. The illustrated embodiment in Figure 3 is illustrated that the cover 46 is held in sealing contact to the sidewalls of the tire casing 40 at location 47 and that the tire casing 40 is inflated as disclosed for example in U.S. Patent 4,075,047. The tire casing 40 is mounted on a rim 49 with a flange member 51 positioned on the rim. The envelope 46 is positioned between the flange member 51 and the tire casing 40. Pressure in the curing tube 26 forces the envelope 46 into sealing contact with the tire casing 40 along the area designated as 47. The flexible cover 46 is provided with a fitting 54 which connects the space 56 between the cover 46 and the tread 42 with the conduit 58. Conduits 58 pass through the pressure vessel 10 and connect with a cover manifold 60 as shown in Figure 1. Along the path of conduit 58 is provided a valve 62. Valve 62 has three positions. It can be closed, it can be open to the cover manifold 60 or it can be open to atmosphere.

The overall function of the illustrated system is, of course, to pressurize the tread 42 against the tire casing 40 by means of fluid in the vessel 10 and simultaneously to heat the bonding material 44 to a temperature at which it can be vulcanized securing the tread 42 to the tire casing 40. A line 64 connects the vessel 10 to a pressure differential check valve 66. The pressure differential valve 66 will pass fluid to a line 68 when the pressure line 64 reaches 15 psi (=0,103 MPa). Line 68 connects valve 66 to pressure regulator valve 69. Pressure regulator valve 69 is connected to the cover manifold 60 by line 71. When fluid pressure starts passing valve 66, pressure regulator valve 69 will remain open until the pressure in line 71 reaches 70 psi (=0,483 MPa) for example, at which time it will close down and will not permit any more pressurized fluid to pass into the cover manifold 60. Connected to the cover manifold 60 is a relief valve 73 which will open if the pressure in the envelope manifold reaches 78 psi =0,538 MPa) for example.

The system is prepared for operation when the pressure vessel 10 has the enclosure 12 open and a series of the tire assemblies 14 can be suspended in the system. When the tire assemblies 14 are placed in the vessel 10, the tire inflation lines 25 are connected to the curing tubes 26 and the covers 46 are connected to the conduits 58. Then the enclosure 12 is closed and locked and the system is started. At the start of the system, the pressure from the fluid pressure source 16 will pass down to the regulator valve 20 through line 18. This pressurized fluid will pass via line 21 into the tire inflation manifold 23. At the same time the pressure will also pass into fill line 27. The differential check valve 31 will not open until the pressure in the line 21 has reached 30 psi (=0,207 MPa). At this time the curing tube 26 will be putting a 30-pound (=0,207 MPa) pressure inside the tire casing 40 and the vessel pressure will be at atmospheric pressure. The differential valve 31 will open and pass pressure into line 32 which will pass pressure through the pressure regulator valve 34 into line 35 which in turn passes this into the inside of the pressure vessel 10. When the pressure in the vessel 10 starts increasing and when it reaches 15 psi (=0,103 MPa) then the pressure in line 64 will be 15 psi (=0,103 MPa). At this time the differential check valve 66 will open and start passing the pressurized fluid into line 68 through the valve 69 into the line 71 on into the cover manifold 60 and through the conduits 58 into the covers 46. This will continue until the pressure in the curing tube 26 reaches 115 psi (=0,793 MPa). At this time the pressure in the vessel 10 will be 85 psi (=0,586 MPa) and the pressure regulator valve 34 will close. The pressure in the cover manifold 60 will be 70 psi (=0,483 MPa) and the pressure regulator valve 69 will close. The system will be stabilized and the curing cycle will be started.

Referring to Figure 2 this is graphically illustrated in reference to the pressure and time. For example, the curing tube 26 will be inflated for approximately 25 minutes to the 30 psi (=0,207 MPa) level. At that time the vessel 10 will start filling and when the vessel 10 reaches 15 psi (=0,103 MPa), the curing tube 26 will be at approximately 40 psi (=0,276 Mpa). Then the cover 46 will start receiving pressure. It will continue in this way for approximately 60 minutes and then the curing tube 26 will be at 115 psi (=0,793 MPa) and the vessel pressure will be 85 psi (=0,586 MPa) and the cover pressure will be 70 psi (=0,483 MPa).

If during the curing cycle at any time one of the tire assemblies 14 would experience a leak in their flexible fluid tight cover 46, the air would pass from the vessel 10 into the cover space 56 through conduit 58 and into the cover manifold 60. The pressure will not be able to go through the pressure regulator valve 69. But if the leak is severe, it will open up relief valve 73. If it is a small leak, it should not do any damage in the system and the pressure can be maintained at 78 psi (=0,538 Mpa) and not damage the cure in the tire assemblies 14. If there is a large gush of air, an operator can go over and by manipulating the valves 62 he can determine with tire assembly 14 is leaking. If it is too severe, he can open that tire assembly 14 to the atmosphere which will prevent any damage occurring to the other tire assemblies 14 in the system. If for example there is no tire assembly 14 in the particular station, then the valve 62 can be closed and it will not affect or be affected by the system.

Referring generally to Figure 4A, there is illustrated a wicking material 75. This can be used to be placed between the tread material 42 and the cover 46 so as to permit easy flow of the fluid into and out of the cover space 56. It is recommended that when the wicking material 75 is used that it be placed all the way across the tread material 42 extending below the bond line 76 on both sides of the tire casing 40.

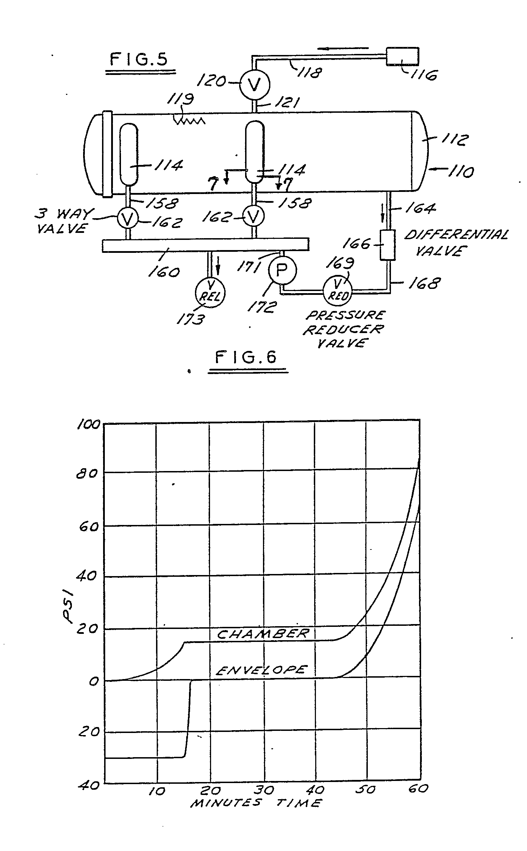

Another embodiment illustrating the present invention is disclosed in Figure 5. We have an autoclave or pressurized vessel 110 which has an enclosure 112. There are tire assemblies 114 positioned inside the vessel 110. We have a fluid pressure source 116 which is connected to a pressure regulator valve 120 by shop pressure line 118. The pressurizing medium is similar to that discussed in reference to Figure 1 and a heater 119 is positioned in vessel 110. The pressure regulator valve 120 is set to close when the pressure reaches 85 psi (=0,586 MPa). The

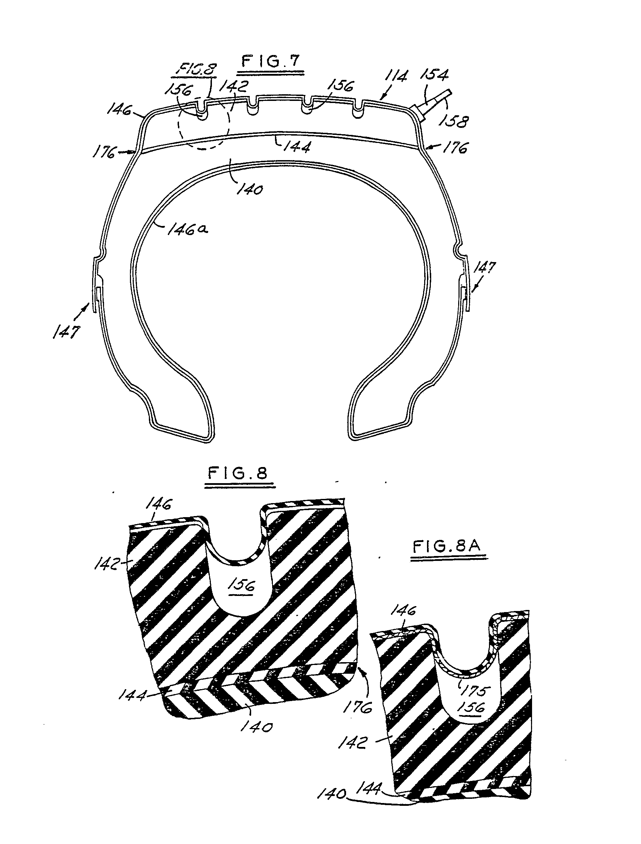

pressure regulator valve 120 is connected to the vessel 110 by line 121. The tire assembly 114, shown in Figure 7, in this embodiment has a tire casing 140 and precured tread 142. A cushion gum or bonding material 144 is positioned between the precured tread 142 and the tire casing 140 to bond the tread 142 to the tire casing 140. The tire casing 140 and tread 142 form a tire assembly 114. The flexible fluid tight member or envelope is an outer cover 146 covering the outside portion and an inner cover 146a which covers the inside portion. Sealing takes place between the covers 146, 146a indicated generally at 147. Therefore, the pressure inside the chamber of 85 psi (=0,586 MPa) will also be within the tire casing 140 and outside the tire casing 140 forcing the covers 146 and 146a against the tire casing 140 illustrated in Figure 7. A fitting 154 connects to a conduit 158 which connects to the cover manifold 160, shown in Figure 5. Positioned along the conduit 158 is a valve 162. Valve 162 has three positions. It can be connected to the atmosphere, it can be shut off or it can connect the covers 146, 146a to the cover manifold 160. A line 164 runs from the pressure vessel 110 to a pressure differential check valve 166. Valve 166 will open up when the pressure in vessel 110 reaches 15 psi (=0,103 MPa). Line 168 connects the check valve 166 to a pressure regulator valve 169. Pressure valve 169 is connected to the cover manifold 160 by line 171. A vacuum pump 172 is connected to line 171 and its function will be explained in more detail later. A relief valve 173 is connected to the cover manifold 160. The pressure relief valve 173 is set to go off for example at 78 psi (=0,538 MPa).

This system will operate by providing a tire assembly 114 inside the pressure vessel 110 and connecting the covers 146, 146a by conduit 158 to the cover manifold 160. After the tire assemblies 114 have been connected and the enclosure 112 closed and secured, the vacuum pump 172 will be opened to line 171 and the pressure regulator valve 169 will be closed. The vacuum pump 172 will draw for example 28 inch (0,095 MPa) vacuum pressure on the cover manifold 160. This will draw a pressure on the tire assembly 114 holding the covers 146 and 146a securely in contact with the tire casing 140. The fluid pressure source 116 will be opened passing pressurized fluid through the shop pressure line 118 to the pressure regulator valve 120 which will in turn pass the fluid pressure through the line 121 into the vessel 110. When the pressure in the vessel 110 reaches 15 psi (=0,103 MPa), the vacuum pump 172 is shut off and the pressure regulator valve 169 is opened. At this time the cover pressure will be changed from a 28 inch (0,095 MPa) vacuum pressure to atmospheric or zero pressure. In the present illustration the vessel pressure is held at 15 psi (=0,103 MPa) for approximately 30 minutes while the temperature in the vessel 110 rises to 160 degrees Fahrenheit (=71°C). When the temperature reaches 160 degrees Fahrenheit (=71°C) for example, valve 120 will be opened again and at this time the covers 146, 146a and the vessel 110 will maintain an approximate 15 psi (=0,103 MPa) differential and it will take about 15 minutes for the vessel 110 to rise to the 85 psi (=0,586 MPa) pressure at which time pressure regulator valve 120 will shut off.

If during curing any of the tire assemblies 114 would experience a leak, relief valve 173 will open up to the atmosphere when the pressure in the cover manifold 160 reaches 78 psi (=0,538 MPa). If this is a large discharge, an operator can go along checking the valve 162 to determine the individual tire assembly 114 which is causing the problem and either open it to atmosphere or turn the system off, thus preventing other tire assemblies 114 from being contaminated by the injured cover 146 and 146a respectively.

Referring to Figure 6 there is illustrated the cover pressure at the start of the curing being at a vacuum of 28 inches (0.095 MPa). Approximately 15 minutes into the cycle when the vessel pressure has risen to 15 psi (=0,103 MPa), the vacuum will be shut off and the cover pressure will go to zero. This condition will maintain itself as stated above for approximately 30 minutes at which time the curve illustrates the system going up to curing conditions where the vessel pressure is 85 psi (=0,586 MPa) and the cover back pressure will be 70 psi (=0,483 MPa).

Figure 8 illustrates the condition of the cover 146 with the tread 142 and a bond line 176 and the tire casing 140, similar to Figure 4. Figure 8A discloses a wicking material 175 which can be utilized in some applications being placed between the cover 146 and the tire tread 142 permitting any air to be evacuated through the wicking material 175 through fitting 154 through the conduit 158, similar to Figure 4A. It is recommended when this is necessary that the wicking material 175 be extended below the bonding lines 176 from one side of the assembly 114 to the other side.

Where the preferred embodiments of the retreading system have been shown and described herein in detail, those skilled in the art will recognize various alternative design embodiment for practicing the present invention as defined by the following claims.

## Claims

1. Method of retreading a wire casing which includes the steps of applying a precured rubber tread (42; 142) to the periphery of a tire casing (40; 140) having side walls, with a layer of vulcanizable rubber base bonding material (44; 144) interposed between the tread (42; 142) and the tire casing (40; 140), covering the tread (42; 142) and at least the adjacent side walls of the tire casing (40; 140) with a flexible air tight cover (46; 146, 146a), applying fluid pressure to the interior of a vessel (10; 110) containing the cover (46; 146,146a), tread (42; 142) and tire casing (40; 140) in order to press the cover (46; 146, 146a) against the assembly of tread (42; 142) and tire casing (40; 140) and supplying fluid pressure from the vessel (10; 110) to the cover (46; 146, 146a) at a predetermined pressure difference between the vessel (10; 110) and the cover (46; 146, 146a), characterized by supplying fluid pressure from the vessel (10; 110) through a pressure differential check valve (66; 166) to a cover manifold (60; 160) positioned outside the vessel (10; 110) and supplying fluid pressure to the cover (46; 146, 146a) from said cover manifold (60; 160).

2. Method according to claim 1, characterized by mounting each tire casing (40) on a rim (49), sealing the cover (46) between extended flanges (51) of the rim (49) and the side walls and placing said mounted tire assemblies (149) in the vessel (10).

3. Method according to claim 1, characterized by covering the tread (142) and tire casing (140) with a flexible air tight cover (146, 146a) inside and outside.

4. Method according to claim 1, 2 or 3, characterized by the check valve (66; 166) supplying fluid pressure to said cover manifold (60; 160) through a pressure regulator valve (69; 169).

5. Method according to claim 4, characterized in that the pressure differential check valve (66; 166) is set at a value of approximately 15 psi (=0.103 MPa) and the pressure regulator valve (69; 169) is set at approximately 70 psi (=0,483 MPa).

6. Method according to one or more of claims 1—5, characterized by providing the cover manifold (60; 160) with a relief means like a relief valve (73) to release pressure when the pressure in the cover manifold (60; 160) increases a set amount over a predetermined pressure.

## Patentansprüche

1. Verfahren zur Runderneuerung einer Reifenkarkasse, bei dem die Schritte des Aufbringens eines vorvulkanisierten Laufstreifens (42; 142) auf dem Umfang der Seitenwände tragenden Karkasse (40; 140) mit einer Lage eines vulkanisierbaren Klebematerials (44; 144) auf Gummibasis zwischen dem Laufstreifen (42; 142) und der Karkasse (40; 140), des Abdeckens des Laufstreifens (42; 142) und zumindest der benachbarten Seitenwände der Karkasse (40; 140) mit einer verformbaren, luftdichten Hülle (46; 146, 146a), des Aufbringens von Flüssigkeitsdruck auf das Innere einer Kammer (10; 110), die die Hülle (46; 146, 146a), den Laufstreifen (42; 142) und die Karkasse (40; 140) enthält, um die Hülle (46; 146, 146a) gegen den Aufbau aus Laufstreifen (42; 142) und Reifenkarkasse (40; 140) zu pressen, und des Versorgens der Hülle (46; 146, 146a) aus der Kammer (10; 110) mit Flüssigkeitsdruck unter einer vorgegebenen Druckdifferenz zwischen der Kammer (10; 110) und der Hülle (46; 146, 146a) enthalten sind, gekennzeichnet durch das Zuleiten von Flüssigkeitsdruck von der Kammer (10; 110) über ein Druckdifferenzventil (66; 166) zu einer Hüllensammelleitung (60; 160), die außerhalb der Kammer (10; 110) angeordnet ist, und durch Zuleiten von Flüssigkeitsdruck zu der Hülle (46; 146, 146a) aus der Hüllensammelleitung (60; 160).

2. Verfahren nach Anspruch 1, gekennzeichnet, durch das Aufziehen jeder Karkasse (40) auf eine Felge (49), durch Abdichten der Hülle (46) zwischen verlängerten Flanschen (51) der Felge (49) und den Seitenwänden und durch Einführen der aufgezogenen Reifenaufbauten (149) in die Kammer (10).

3. Verfahren nach Anspruch 1, gekennzeichnet, durch das Abdecken des Laufstreifens (142) und der Karkasse (140) mit einer verformbaren luftdichten Hülle (146, 146a) innen und außen.

4. Verfahren nach Anspruch 1, 2 oder 3, gekennzeichnet durch das Druckdifferenzventil (66; 166), das Flüssigkeitsdruck zu der Hüllensammelleitung (60; 160) über ein Druckregelventil (69, 169) liefert.

5. Verfahren nach Anspruch 4, dadurch gekennzeichnet, daß das Druckdifferenzventil (66; 166) auf einen Wert von ungefähr 15 psi (=0,103 MPa) und das Druckregulventil (69; 169) auf einen Wert von ungefähr 70 psi (=0,483 MPa) eingestellt ist.

6. Verfahren nach einem oder mehreren der Ansprüche 1 bis 5, gekennzeichnet durch die Ausstattung der Hüllensammelleitung (60; 160) mit Entlastungsmitteln wie einem Überlastventil (73), um Druck abzulassen, wenn der Druck in der Hüllensammelleitung (60; 160) einen vorgegebenen Druck um einen bestimmten Betrag übersteigt.

## Revendications

1. Procédé de rechapage de pneus qui comprend les étapes de l'application d'une sculpture de pneu précuite en caoutchouc (42; 142) à la périphérie d'un pneu (40; 140) ayant des parois latérales, avec une couche de matériau adhésif (44; 144) vulcanisable, à base de caoutchouc, interposée entre la sculpture du pneu (42; 142) et le pneu (40; 140), du recouvrement de la sculpture du pneu (42; 142) et au moins des parois latérales adjacentes du pneu (40; 140) par un revêtement hermétique flexible (46; 146, 146a), de l'application d'une pression de fluide à l'intérieur d'un réservoir (10; 110) contenant le revêtement (46; 146, 146a), la sculpture du pneu (42; 142) et le pneu (40, 140) pour presser le revêtement (46; 146, 146a) contre l'ensemble constitué par la sculpture du pneu (42; 142) et le pneu (40; 140) et de l'amenée d'une pression de fluide provenant du réservoir (10; 110) sur le revêtement (46; 146, 146a) à une différence de pression prédéfinie entre le réservoir (10; 110) et le revêtement (46; 146, 146a), caractérisé par l'amenée de pression de fluide du réservoir (10; 110) par une soupape de retenue de différence de pression (66; 166) à un répartiteur de revêtement (60; 160) situé à l'extérieur du réservoir (10; 110) et par l'amenée de pression de fluide au revêtement (46; 146, 146a) à partir du répartiteur de revêtement nommé (60; 160).

2. Procédé selon la revendication 1, caractérisé par le montage de chaque pneu (40) sur une jante (49), le scellement du revêtement (46) entre les joues de jante (51) sorties de la jante (49) et les parois latérales et la mise en place des ensembles de pneu montés (149) dans le réservoir (10).

3. Procédé selon la revendication 1, caractérisé par le recouvrement de la sculpture du pneu (142) et du pneu (140) par un revêtement hermétique flexible (146, 146a) à l'intérieur et à l'extérieur.

4. Procédé selon l'une des revendications 1, 2 ou 3, caractérisé par la soupape de retenue (66; 166) amenant la pression de fluide au répartiteur de revêtement nommé (60; 160) par une valve de réglage de la pression (69; 169).

5. Procédé selon la revendication 4, caractérisé en ce que la soupape de retenue de différence de pression (66; 166) se déclenche à une valeur de 15 psi environ (=0,103 MPa) et la valve de réglage de pression (69; 169) à environ 70 psi (=0,483 MPa).

6. Procédé selon l'une ou plusieurs des revendications 1 à 5, caractérisé en ce que le répartiteur de revêtement (60; 160) est pourvu d'un organe de sûreté tel qu'une soupape de sûreté (73) pour dégager de la pression lorsque la pression du répartiteur de revêtement (60; 160) dépasse d'une certaine valeur une pression prédéfinie.

0 075 288

FIG.1

FIG.2

1

FIG.3

FIG.4

FIG.4A

FIG.5

3 WAY VALVE

DIFFERENTIAL VALVE

PRESSURE REDUCER VALVE

FIG.6

CHAMBER

ENVELOPE

PSI

MINUTES TIME

FIG.7

FIG.8

FIG.8A

4